# EUROPEAN PATENT APPLICATION

(11) **EP 1 142 685 A2**
(43) Date of publication of application: **10.10.2001**
(21) Application number: 01102476.7
(22) Date of filing: 05.02.2001
(51) Int. Cl.: B29C 45/17, B29C 45/00

(54) **A method for manufacturing plastic articles and a plastic material to be used in performing the method**

(30) Priority: 06.04.2000 SE 0001257
(71) Applicant: Polykemi AB, 271 21 Ystad (SE)
(72) Inventor: Akesson, Peter, 271 42 Ystad (SE)
(74) Representative: Linde, Leif

(57) **Abstract**

A method for manufacturing injection moulded plastic articles comprises the supply of hollow bodies, for example hollow spherical glass beads, to the plastic material intended for the manufacturing of the injection moulded plastic articles with the object of reducing the specific weight of the plastic articles. In order to reduce the pressure established on the hollow bodies and prevent that the bodies are destroyed there are provided gas inclusions in the plastic mateial during the injection moulding. The invention comprises also a plastic material to be used when performing the method.

## Description

The present invention relates to a method for manufacturing injection moulded plastic articles having a low specific weight, in which hollow bodies, for example spherical glass beads, are incorporated with the plastic material, and a plastic material to be used when performing the method.

There is i.a. within the car industry a requirement for injection moulded plastic articles having a low specific weight. It is previously known to provide a low specific weight of injection moulded plastic articles by including hollow bodies, for example spherical glass beads with the plastic material which is used for injection moulding the plastic articles. It is thereby a problem that the hollow bodies are smashed during the injection moulding which provides for an increased specific weight of the plastic articles instead of a decreased specific weight.

The object of the invention is to provide a method and a plastic material for reducing the specific weight of plastic articles when injection moulding the articles by including hollow bodies, for example spherical glass beads, with the plastic material preventing that the hollow bodies are crushed or destroyed in any other way.

In order to comply with this object the method according to the invention is characterized in that gas inclusions are provided in the plastic material during the injection moulding so as to reduce the pressure of the plastic material on the hollow bodies.

A plastic material to be used when performing the method comprises a fermenting agent which during the injection moulding provides the gas inclusions.

The gas inclusions in the plastic material can be provided in different ways, for example by injecting a gas, for example nitrogen gas into the plastic material, by the fact that the plastic material is supplied with a liquid which is evaporated in the plastic material or by the fact that the plastic material is supplied with a fermenting agent, for example hydrophobic citric acid, forming the gas inclusions in the plastic material. The injection of a gas, for example a nitrogen gas, can be provided in different ways, for example by supplying the gas to the moulding cavity through the injection moulding nozzle or through channels which are connected with the moulding cavity of the moulding tool or to the injection moulding nozzle for the plastic material.

The liquid which is evaporated in the plastic material for forming the gas inclusions or the fermenting agent is suitably supplied to the plastic material in connection with the injection thereof in the moulding cavity. The fermenting agent can be exothermic or endothermic. It is advantageous if the fermenting is endothermic as an endothermic fermenting agent gives a more regular structure and a more continuous surface of the plastic articles than an exothermic fermenting agent.

Two different embodiments of the method according to the invention shall in the following be described with reference to the accompanying drawings.

Fig. 1 shows partly in section an injection moulding machine for performing the method according to the invention.

Fig. 2 illustrates a first step when performing the method according to the invention by means of the injection moulding machine shown in Fig. 1.

Fig. 3 shows the injection moulding machine subsequently to the performing of the method according to the invention.

Fig. 4 shows a second embodiment of an injection moulding machine for performing a modified embodiment of the method according to the invention.

Fig. 5 shows the injection moulding machine according to Fig. 4 subesequently to performing the modified embodiment of the method according to the invention.

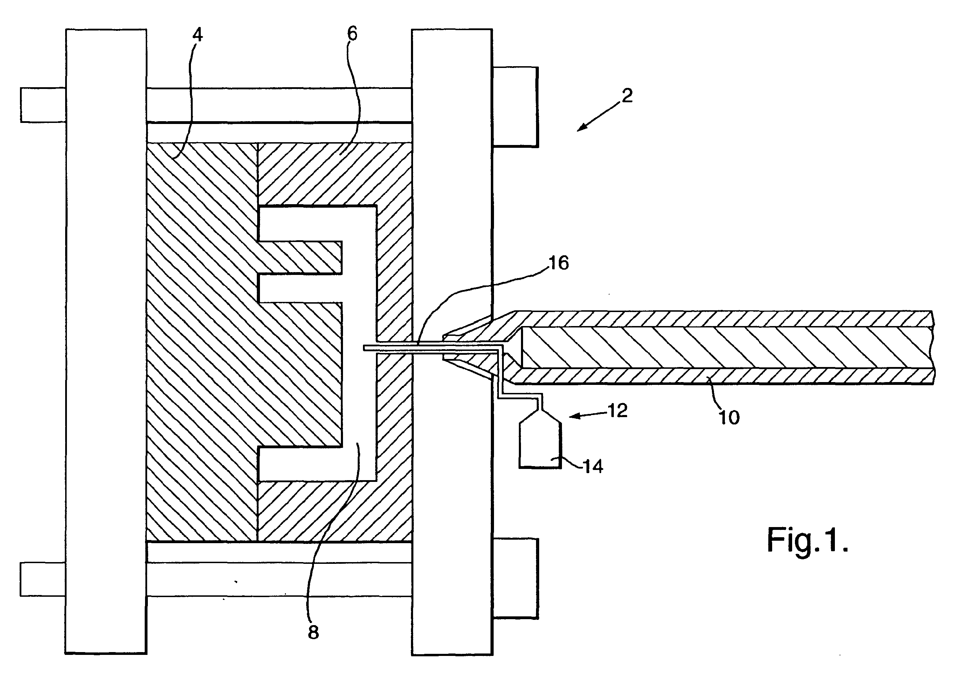

The injection moulding machine shown in Fig. 1 for performing a first embodiment of the method according to the invention comprises a moulding tool 2 consisting of two mould parts 4 and 6 which together define a mould cavity 8 for providing the plastic article. The mould cavity 8 is supplied with a molten plastic material by means of a screw cylinder 10 in a conventional way. The injection moulding machine for performing the method according to the invention is different from a conventional injection moulding machine by the fact that it is provided with a device 12 for the supply of a gas or a liquid to the mould cavity 8. The device 12 consists of a container 14 and a conduit 16 extending from the container 14 and opening into the mould cavity 8.

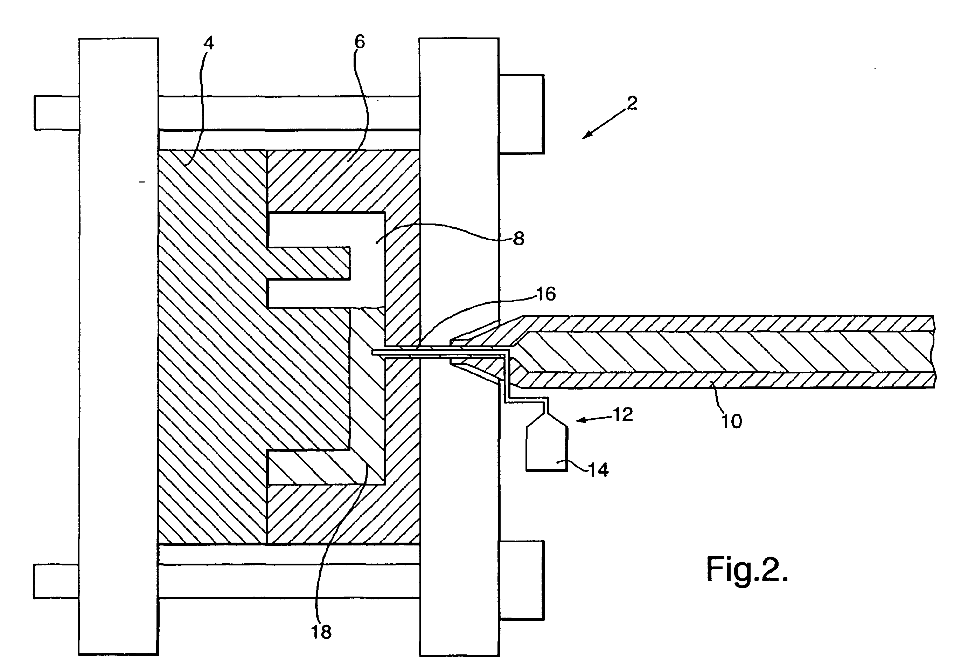

When performing the method according to the invention by means of the injection moulding machine shown in Fig. 1 the plastic material 18 is in a molten condition injected into the mould cavity 8 by means of the screw cylinder 10 as appears from Fig. 2. The molten plastic material consists for example by a polyolefin polymer containing spherical glass beads in an amount of 2-40 percentage by weight. The spherical glass beads have the object of reducing the specific weight of the plastic article which is manufactured in the mould cavity 8. In order to prevent that the spherical beads are crushed during the injection moulding the mould cavity 8 is only partially filled with the molten plastic material comprising the spherical glass beads. The filling of the mould cavity can be provided to the extent as shown in Fig. 2.

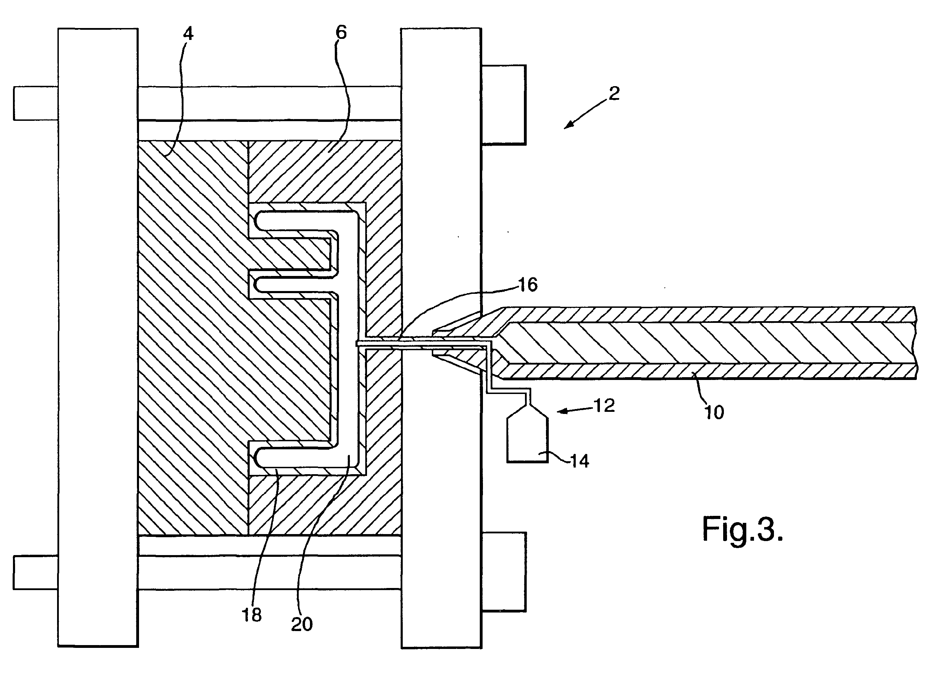

At the next step of performing the method according to the invention there is supplied a gas, for example nitrogen gas, to the mould cavity 8 from the container 14 through the conduit 16. The gas 20 forces the molten plastic material 18 against the surfaces defining the mould cavity 8, as shown in Fig. 3. The gas inclusion 20 provides that the spherical beads are not crushed during the injection moulding action by the fact that the gas inclusion 20 lowers the pressure which is exerted on the spherical glass beads.

The molten plastic material, for example the polyolefin polymer, containing the spherical glass beads can contain further additives for improving the properties of the plastic material, such as antioxidants, heat stabilizers, lubricants, impact strength modifying means etc. These additional additives should as a total not exceed 20 percentage by weight of the plastic material. In addition to these additives the plastic material can also contain one or several inorganic reinforcement materials, such as talc, mica powder, glass fibres and so on.

As described it is possible to manufacture plastic articles having a density which is lower than 0,9 g/cm³ by the fact that the spherical glass beads reducing the specific weight of the plastic material are not crushed or destroyed in any other way because of the gas injection as described above. The gas injection forces the molten plastic material against the surfaces of the mould cavity 8 which reduces the requirement for the high pressure which is required at conventional injection moulding of homogeneous plastic articles and which leads to that the spherical glass beads are crushed. If the correct amount of plastic material is injected into the mould cavity 8 prior to the gas supply, the gas will be positioned centrally in the plastic article without being positioned at an outer surface thereof.

The gas injection can be provided either through the nozzle by means of which the plastic material is supplied or by means of one or several nozzles which are connected directly to the mould cavity 8. The gas supply takes place at a pressure of 100-300 bars and subsequently to the supply of the gas the pressure of the gas is reduced so that the gas pressure acts as a post pressure. The last step of injection moulding plastic articles according to the method according to the invention consists of cooling the plastic article and evacuation of the gas.

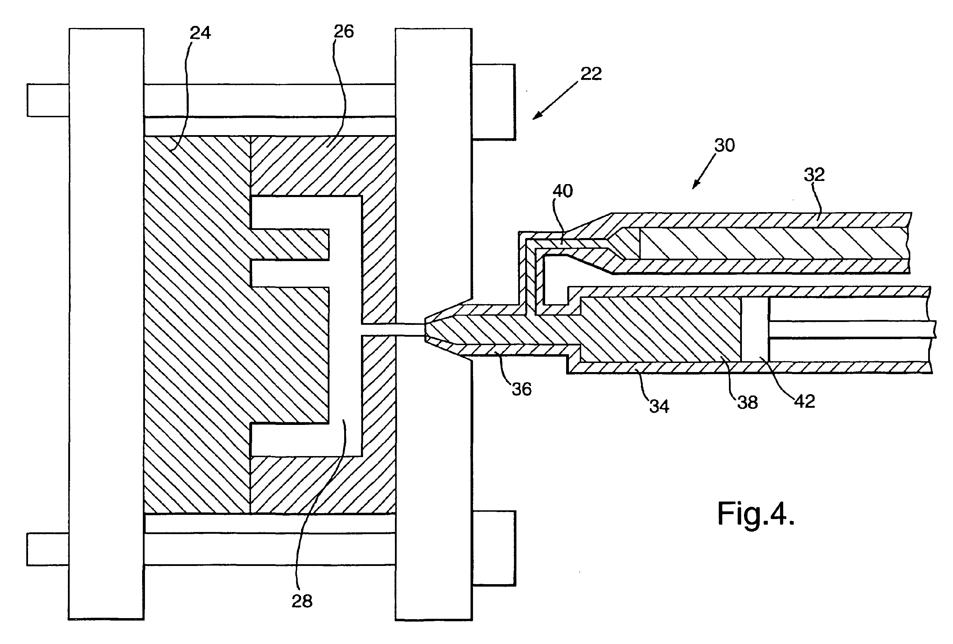

In a modified embodiment of manufacturing injection moulded plastic articles according to the method of the invention there is used the injection moulding machine shown in Fig. 4. Also in this case the injection moulding machine comprises an injection moulding tool 22 consisting of two tool parts 24 and 26 which together define a mould cavity 28. To the mould cavity 28 there is connected a device 30 consisting of a screw cylinder 32 and a cylinder 34 for the supply of a fermenting agent. The screw cylinder 32 and the cylinder 34 for fermenting agent are connected to a common nozzle 36 which is connected with the mould cavity 28. Like the embodiment described above the screw cylinder 32 of the injection moulding machine contains a plastic material, for example a polyolefin polymer in a molten condition containing spherical glass beads in an amount of 2-40 percentage by weight so as to reduce the specific weight of the final plastic article. In addition thereto the molten plastic material can contain inorganic reinforcement agents, such as talc, mica powder, glass fibres and also other additives such as antioxidation agents, heat stabilizers, lubricants, impact strength modifying agents and so on. These additional additives should not amount to more than about 20 percentage by weight of the weight of the plastic material.

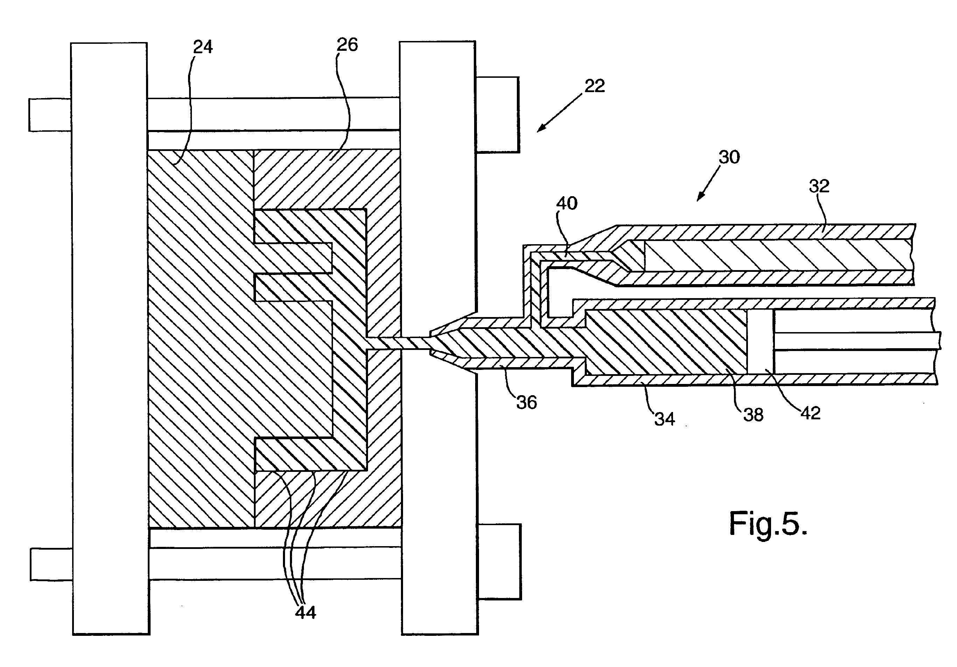

In order to prevent that the spherical glass beads are crushed or are in any other way destroyed during the injection moulding a fermenting agent 38 is supplied to the molten plastic material through the cylinder 34.The fermenting agent is preferably constituted by an endothermic fermenting agent which for example is constituted by a hydrophobic citric acid. Preferably the hydrophobic citric acid is mixed with sodium bicarbonate. When molten plastic material 40 is supplied from the screw cylinder 32 the plastic material is supplied with fermenting agent from the cylinder 34 by the fact that the plunger 38 forces the fermenting agent into the molten plastic material. When the plastic material and the fermenting agent mixed therewith arrive to the mould cavity 28, the fermenting agent forms gas inclusions 44 in the plastic material so that an expanded product is obtained as appears from Fig. 5. Because of the gas inclusions it is prevented that the spherical glass beads are crushed or destroyed in any other way.

The invention can be modified within the scope of the following claims. Thus, it is according to the method shown in Fig. 1-3 possible to conduct the invention by supplying a liquid from the container 14 instead of a gas, whereby the liquid is vaporized in the molten plastic material subsequently to the supply to the mould cavity 8.

It is also possible in the embodiment according to Figs 4 and 5 to remove the cylinder 34 and supply the screw cylinder 32 with a plastic material, a thermoplastic compound, containing a fermenting agent forming gas inclusions in the plastic material.

The plastic material, the compound, which is used in the method according to the invention has preferably a stiffness which is lower than 2500 N/mm² and preferably amounts to 500-2500 N/mm² (a modulus of bending according to ISO 178).

## Claims

1. A method for manufacturing injection moulded plastic articles in which the plastic material for forming the injection moulded plastic articles is supplied with hollow bodies, for example hollow spherical glass beads, in order to reduce the specific weight of the plastic articles, **characterized in that** gas inclusions are during the injection moulding provided in the plastic material so as to reduce the pressure established by the plastic material on the hollow bodies.

2. A method as claimed in claim 1, **characterized in that** gas is injected into the plastic material.

3. A method as claimed in claim 2, **characterized in that** nitrogene gas is injected into the plastic material.

4. A method as claimed in any of the preceding claims, **characterized in that** the gas is injected at a pressure of 100-300 bars.

5. A method as claimed in any of claims 2-4, **characterized in that** the gas is supplied through the injection moulding nozzle.

6. A method as claimed in any of claims 2-5, **characterized in that** the gas is supplied through channels which are connected with the mould cavity of the moulding machine or to the injection nozzle for the plastic material.

7. A method as claimed in any of the preceding claims, **characterized in that** the plastic material is supplied with a liquid which is vaporized in the plastic material so as to form gas inclusions therein.

8. A method as claimed in any of claims 2-7, **characterized in that** the gas is evacuated from the plastic product subsequently to the cooling thereof.

9. A method as claimed in any of the preceding claims, **characterized in that** the plastic material is supplied with a fermenting agent forming gas inclusions in the plastic material.

10. A method as claimed in claim 9, **characterized in that** the fermenting agent is an endothermic agent.

11. A method as claimed in claim 9 or 10, **characterized in that** the fermenting agent is constituted by a hydrophobic citric acid.

12. A method as claimed in claim 10, **characterized in that** the hydrophobic citric acid is mixed with sodium bicarbonate.

13. A method as claimed in any of the preceding claims, **characterized in that** the plastic material is supplied with 2-40 percentage by weight of hollow bodies.

14. A method as claimed in any of the preceding claims, **characterized in that** the plastic material is supplied with hollow bodies in such an amount that its specific weight is lower than 0,9 g/cm³.

15. A method as claimed in any of the preceding claims, **characterized in that** the plastic material is supplied with different additives, such as antioxidants, heat stabilizers, lubricants and impact strength modifying agents.

16. A method as claimed in any of the preceding claims, **characterized in that** the plastic material is supplied with inorganic strengthening agents, such as talc, mica powder and glass fibres.

17. A method as claimed in claim 15 or 16, **characterized in that** the additives are supplied to the plastic material in an amount which is lower than 20 percentage by weight.

18. A plastic material to be used when performing the method according to any of the preceding claims, the plastic material containing hollow bodies, for exemple hollow spherical glass beads, **characterized in that** the plastic material contains a fermenting agent forming gas inclusions in the plastic material.

19. A plastic material as claimed in claim 18, **characterized in that** the fermenting agent constitutes 0,5 - 5% of the plastic material.

20. A plastic material as claimed in claim 18 or 19, **characterized in that** the fermenting agent is an endothermic agent.

21. A plastic material as claimed in any of claims 18-20, **characterized in that** the fermenting agent is constituted by a hydrophobic citric acid.

22. A plastic material as claimed in claim 21, **characterized in that** the hydrophobic citric acid is mixed with sodium bicarbonate.

23. A plastic material as claimed in any of claims 18-22, **characterized in that** it contains different additives, such as antioxidants, heat stabilizers, lubricants and impact strengt modifying agents.

24. A plastic material as claimed in any of claims 18-23, **characterized in that** it contains inorganic strengthening agents, such as talc, mica powder and glass fibres.

25. A plastic material as claimed in any of claims 18-24, **characterized in that** it has a stiffness which is lower than 2500 N/mm².

26. A plastic material as claimed in claim 25, **characterized in that** it has a stiffness which amount to between 500 and 2500 N/mm².
